Europäisches Patentamt

European Patent Office

Office européen des brevets

(11) Veröffentlichungsnummer: **0 398 867**
**A2**

# EUROPÄISCHE PATENTANMELDUNG

(21) Anmeldenummer: 90890154.9

(22) Anmeldetag: 17.05.90

(51) Int. Cl.5: **A23G 1/00**

(30) Priorität: 18.05.89 AT 1197/89

(43) Veröffentlichungstag der Anmeldung:
22.11.90 Patentblatt 90/47

(84) Benannte Vertragsstaaten:
BE DE DK ES FR GB GR IT LU NL SE

(71) Anmelder: **Maresi Markenartikelvertrieb**
**Gesellschaft m.b.H.**
**Werdertorgasse 5-7**
**A-1013 Wien(AT)**

(72) Erfinder: **Reiterich, Albert**
**Hintere Gartengasse 2**
**A-7021 Baumgarten(AT)**
Erfinder: **Wolfslehner, Leopold, Dr.**
**Sportgasse 2**
**A-2263 Dürnkrut(AT)**

(74) Vertreter: **Wolfram, Gustav, Dipl.-Ing.**
**Schwindgasse 7 P.O. Box 205**
**A-1041 Wien(AT)**

(54) Zur Herstellung eines Getränkes bestimmte Zubereitung.

(57) Eine kakaohältige Zubereitung enthält neben Kakaopulver, Süßungsmittel und Aromstoffen noch zusätzlich essentielle Nährstoffe, ausgewählt aus
- Weizenkeimlingen in einer Menge von 2 bis 30 %,
- Sojaeiweiß in einer Menge von 2 bis 30 %,
die Mineralstoffe Calcium und Magnesium,
die Vitamine $B_1$, $B_2$, $B_6$ und C und Lezithin als Emulgator.

Die erfindungsgemäße Zubereitung kann mit kalter oder heißer Milch zu einem ernährungsphysiologisch hochwertigen Getränk für Kinder und Jugendliche in der Wachstumsphase angereichert werden.

EP 0 398 867 A2

## Zur Herstellung eines Getränkes bestimmte Zubereitung

Die Erfindung betrifft eine zur Herstellung eines Getränkes bestimmte Zubereitung, welche Kakaopulver, Süßungsmittel und Aromastoffe enthält.

Eine derartige Zubereitung ist aus der DE-A - 37 38 042 bekannt und wird üblicherweise mit kalter oder heißer Milch zu einem Getränk angerührt. Neben 10 bis 50 % Kakaopulver, 5 bis 60 % Süßungsmittel enthält die genannte Zubereitung noch Getreidebestandteile, wie Haferflocken und Cornflakes, und Frucht- und Nußbestandteile in zerkleinerter Form. Diese zusätzlichen Bestandteile sollen verdauungsfördernd wirken, da herkömmliche kakaohältige Zubereitungen bei sensiblen Personen manchmal zu Verstopfungen führen können.

Von Ernährungsfachleuten wird bedauert, daß bis heute keine kakaohältige Zubereitung angeboten wird, deren Inhaltsstoffe speziell auf den Nährstoffbedarf von Kindern und Jugendlichen in deren Wachstumsphase abgestimmt sind.

Die Erfindung stellt sich die Aufgabe, eine Zubereitung zur Herstellung eines wässerigen Getränkes zur Verfügung zu stellen, welches den Bedarf an energieliefernden und aufbauenden, essentiellen Nährstoffen deckt.

Die Erfindung besteht darin, daß in einer Zubereitung der eingangs erwähnten Art noch zusätzlich essentielle Nährstoffe, ausgewählt aus
- Weizenkeimlingen in einer Menge von 2 bis 30 %,
- Sojaeiweiß in einer Menge von 2 bis 30 %,
die Mineralstoffe Calcium und Magnesium,
die Vitamine $B_1$, $B_2$, $B_6$ und C und Lezithin als Emulgator enthalten sind.

Diese Zusammensetzung beruht insbesondere auf der Erkenntnis, daß im Bereich des Baustoffwechsels die Proteine (unter Beachtung einer optimalen biologischen Wertigkeit) sowie Calcium als wichtigster Knochen- und Zahnaufbaustoff und Magnesium von zentraler Bedeutung sind. In den Energie- und Baustoffwechsel greifen im Sinne von Reglerstoffen (Coenzyme) die Vitamine $B_1$, $B_2$ und $B_6$ sowie Magnesium ein. Vitamin C ist ein wichtiger Schutzfaktor für die Gesundheit. Ein vermehrter Energieumsatz, der besonders in der Wachstumsphase besteht, ist mit einem erhöhten Vitamin-$B_1$-Bedarf verbunden.

Die erfindungsgemäße Zubereitung enthält weite Vitamin $B_6$ als zentrales Coenzym des Eiweißstoffwechsels und Vitamin $B_2$, das in den Fett-, Kohlenhydrat- und Eiweißstoffwechsel eingreift.

Es hat sich weiters aus ernährungsphysiologischen Gründen als sinnvoll erwiesen, mit der erfindungsgemäßen Zubereitung nicht einzelne isolierte Nährstoffe - beispielsweise Protein oder Calcium - zuzuführen, sondern mehrere relevante Nahrungsfaktoren. Der biologische Wert der erfindungsgemäßen Zubereitung ist damit in der speziellen Kombination der an sich bekannten Inhaltsstoffe begründet.

Durch den Gehalt an Sojaeiweiß, z.B. in Form von Vollsojamehl oder getrockneter Sojamilch, werden die physikalischen, organoleptischen und ernährungsphysiologischen Eigenschaften der erfindungsgemäßen Zubereitung wesentlich verbessert.

So wird z.B. eine Phasentrennung beim Anrühren mit Milch oder Wasser verhindert, die üblicherweise bei Instantprodukten zu beobachten ist, wenn sie lösliche, unlösliche und feinst vermahlene, fettig-ölige Bestandteile enthalten.

Vollsojamehl oder getrocknete Sojamilch besitzen außerdem eine aus ernährungsphysiologischer Sicht geradezu ideale Fettsäurezusammensetzung. Etwa jede zweite Fettsäure ist ein- bis mehrfach ungesättigt. Darüber hinaus stellen sie als pflanzliches Protein eine ideale Ergänzung zum tierischen Milchprotein und somit eine Steigerung der biologischen Wertigkeit dar.

Eine besonders hochwertige erfindungsgemäße Zubereitung liegt vor, wenn als essentieller Nährstoff noch zusätzlich Vollkornmehl in einer Menge von 2 bis 30 % enthalten ist.

Die Mineralstoffe Calcium und Magnesium liegen vorzugsweise in einem Ionen-Mengenverhältnis von 2 : 1 vor, wobei zur Förderung der Calciumaufnahme Milchzucker in einer Menge von 5 bis 15% der Zubereitung enthalten ist.

Zweckmäßigerweise sind die Mineralstoffmischung in einer Menge von 2,5 bis 4 g/100 g der Zubereitung und die Vitamine in einer Menge von insgesamt 50 bis 100 mg/100 g der Zubereitung enthalten enthalten. Damit ist eine Forderung von Ernährungsfachleuten erfüllt, nach der pro Tagesration des fertigen Getränkes etwa ein Drittel des jeweiligen Vitamin-und Mineralstoff-Tagesbedarfes zugeführt werden soll, wobei angenommen wird, daß pro Tasse (150 ml) etwa 15 g der erfindungsgemäßen Zubereitung verzehrt werden und die jeweilige Tagesration der erfindungsgemäßen Zubereitung etwa 40 g beträgt.

In einer weiteren zweckmäßigen Ausführungsform liegt die erfindungsgemäße Zubereitung in Form von Agglomeraten vor, die durch Dampfagglomeration einer feinkörnigen Mischung der Bestandteile der Zubereitung erhalten wird, die zu mindestens 70 % aus Körnern mit einem Durchmesser von maximal 30 μm besteht. In dieser Form kann die erfindungsgemäße Zubereitung in kalter oder heißer Milch rasch zu einem klumpenfreien Getränk angerührt werden.

Die erfindungsgemäße Zubereitung wird hergestellt, indem zunächst alle gewünschten Bestandteile gemischt und in einer Schlagmühle fein vermahlen werden, wobei vorzugsweise mindestens 70 % der Körner Durchmesser von maximal 30 μm und der restliche Teil Durchmesser von maximal 100 μm aufweisen. Die Mischung wird in an sich bekannter Weise einer Dampfagglomeration unterworfen, indem sie mit einem Dampf-Luft-Gemisch durchwirbelt wird. Danach werden die Agglomerate getrocknet und abgefüllt.

In den nachstehenden Beispielen sind verschiedene Rezepturen der erfindungsgemäßen Zubereitung beschrieben, wobei jeweils die Kilogramm-Mengen angegeben sind, die in 1000 kg der fertigen Zubereitung enthalten sind. Die Mineralstoffe Calcium und Magnesium sind bei allen Beispielen im Ionen-Mengenverhältnis von 2 : 1 in der Mineralstoffmischung enthalten.

| Beispiel 1: | |
|---|---|
| Kakao 10/12 | 250 |
| Weizenkeimlinge | 20 |
| Sojaeiweiß | 100 |
| Mineralstoffmischung (als Tricalcium- und Trimagnesiumphosphat) | 40 |
| Vitamine $B_1$,$B_2$,$B_6$ und C | 1 |
| Lezithin | 12 |
| Milchzucker | 50 |
| Zucker | 527 |
| Korngrößenverteilung vor Dampfagglomeration: | |
| 0 μm < 80% ≤30 μm | |
| 30 μm < 20% ≤100 μm | |

| Beispiel 2: | |
|---|---|
| Kakao 12/14 | 250 |
| Weizenkeimlinge | 100 |
| Vollsoja-Eiweißpulver (39 % Eiweiß) | 51,3 |
| Mineralstoffmischung (als Phosphat und Gluconat) | 25 |
| Vitamine $B_1$,$B_2$,$B_6$ und C | 0,5 |
| Milchzucker | 150,0 |
| Lezithin | 12 |
| Zucker | 406,2 |
| Aromastoffe | 5 |
| Krongrößenverteilung vor Dampfagglomeration: | |
| 0 μm < 85 % ≤30 μm | |
| 30 μm < 15 % ≤100 μm | |

EP 0 398 867 A2

| Beispiel 3: | |
|---|---|
| Kakoa 20/22 | 300 |
| Weizenkeimlinge | 60 |
| Sojaeiweiß-Konzentrat (70 % Eiweiß) | 100 |
| Vollkornmehl | 20 |
| Mineralstoffmischung (als Phosphat und Carbonat) | 30 |
| Vitamine $B_1$,$B_2$,$B_6$ und C | 0,8 |
| Milchzucker | 75 |
| natürliche Vanille und Vanillin | 2 |
| Lezithin | 12 |
| Zucker | 400,2 |

Korngrößenverteilung vor Dampfagglomeration:

0 $\mu$m < 90 % ≤30 $\mu$m

30 $\mu$m < 10 % ≤100 $\mu$m

| Beispiel 4: | |
|---|---|
| Kakao 22/24 | 290 |
| Weizenkeimlinge | 70 |
| Vollsoja-Eiweißpulver (39 % Eiweiß) | 256,4 |
| Vollkornmehl | 100 |
| Mineralstoffmischung (als Gluconat und Carbonat) | 35 |
| Vitamine $B_1$,$B_2$,$B_6$ und C | 1 |
| Milchzucker | 90 |
| Lezithin | 9 |
| Aromastoffe | 5 |
| Zucker | 143,6 |

Korngrößenverteilung vor Dampfagglomeration:

0 $\mu$m < 92 % ≤30 $\mu$m

30 $\mu$m < 8 % ≤100 $\mu$m

**Ansprüche**

1. Zur Herstellung eines Getränkes bestimmte Zubereitung, enthaltend Kakaopulver, Süßungsmittel und Aromastoffe, dadurch gekennzeichnet,

daß noch zusätzlich

die essentiellen Nährstoffe Weizenkeimlinge und Sojaeiweiß, jeweils in einer Menge von 2 bis 30 %,

die Mineralstoffe Calcium und Magnesium,

die Vitamine $B_1$, $B_2$, $B_6$ und C und

Lezithin als Emulgator enthalten sind.

2. Zubereitung nach Anspruch 1, dadurch gekennzeichnet, daß als essentieller Proteinnährstoff noch zusätzlich Vollkornmehl in einer Menge von 2 bis 30 % enthalten ist.

3. Zubereitung nach einem der Ansprüche 1 oder 2, dadurch gekennzeichnet, daß die Mineralstoffe Calcium und Magnesium in einer Mischung von Calcium- und Magnesiumsalzen, vorzugsweise in einem Mengenverhältnis der Ionen von 2 : 1, enthalten sind und daß zur Förderung der Calciumaufnahme Milchzucker in einer Menge von 5 bis 15 % der Zubereitung enthalten ist.

4. Zubereitung nach Anspruch 3, dadurch gekennzeichnet, daß die Mineralstoffmischung in einer Menge von 2,5 bis 4 g/100 g der Zubereitung enthalten ist.

5. Zubereitung nach einem oder mehreren der Ansprüche 1 bis 4, dadurch gekennzeichnet, daß die

4

Vitamine in einer Menge von insgesamt 50 bis 100 mg/100 g der Zubereitung enthalten sind.

6. Zubereitung nach einem oder mehreren der Ansprüche 1 bis 5, dadurch gekennzeichnet, daß sie in Form von Agglomeraten vorliegt, die durch Dampfagglomeration einer feinkörnigen Mischung der Bestandteile der Zubereitung erhalten wird, die zu mindestens 70 % aus Körnern mit einem Durchmesser von maximal 30 μm besteht.